# EUROPEAN PATENT APPLICATION

(11) **EP 4 845 044 A1**
(43) Date of publication of application: **25.11.2026**
(21) Application number: 25754595.4
(22) Date of filing: 10.02.2025
(51) Int. Cl.: H04B 7/0456, H04B 7/06, H04W 8/24, H04W 72/21, H04W 72/231, H04W 72/232, H04W 72/0446, H04W 72/0453, H04L 5/00, H04L 25/02

(54) **METHOD AND APPARATUS FOR SUPPORTING TWO-DIMENSIONAL PRECODING IN WIRELESS COMMUNICATION SYSTEM**

(30) Priority: 13.02.2024 KR 20240020521
(71) Applicant: Samsung Electronics Co., Ltd., Suwon-si, Gyeonggi-do 16677 (KR)
(72) Inventor: PARK, Yosub, Suwon-si Gyeonggi-do 16677 (KR); KIM, Donghyeon, Suwon-si Gyeonggi-do 16677 (KR); SEO, Bongsung, Suwon-si Gyeonggi-do 16677 (KR)
(74) Representative: Nederlandsch Octrooibureau
(86) International application number: PCT/KR2025/001914
(87) International publication number: WO 2025/174008

(57) **Abstract**

The present disclosure relates to a 5G or 6G communication system for supporting a higher data transmission rate than a 4G communication system such as LTE. Particularly, according to various embodiments of the present disclosure, a method performed by a base station in a wireless communication system comprises the steps of: identifying capability information of a user equipment regarding 2D precoding; if the user equipment supports the 2D precoding, selecting the 2D precoding on the basis of channel information associated with the user equipment; and transmitting, to the user equipment, an index indicating the 2D precoding.

## Description

### [Technical Field]

The disclosure generally relates to a wireless communication system and, more particularly, to an apparatus and a method for selecting and signaling two-dimensional precoding in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, various requirements of the NR communication system have significantly increased compared to those of the previous-generation LTE communication system. The requirements may include a user-experienced data rate, a peak data rate, spectral efficiency, latency, mobility, network energy efficiency, connectivity, and the like. Among these requirements, an orthogonal time frequency space (OTFS) system has been proposed as a waveform study for supporting mobility. Orthogonal frequency division multiplexing (OFDM), which is used in LTE and NR, may be highly vulnerable to the Doppler effect occurring in an environment in which a receiver moves. In OFDM, a complex Doppler compensation algorithm may be required at the receiver in order to handle a frequency shift caused by the Doppler effect. However, a complex Doppler compensation algorithm may cause an increase in complexity. Meanwhile, OTFS may be a method of effectively handling a frequency shift caused by Doppler with low complexity by processing a signal in a delay-Doppler domain using a symplectic finite Fourier transform (SFFT). Accordingly, a scheme for supporting such OTFS is required.

### [Disclosure of Invention]

### [Technical Problem]

Various embodiments of the disclosure are to provide an apparatus and a method capable of effectively providing services in a wireless communication system.

### [Solution to Problem]

According to various embodiments of the disclosure, a method performed by a base station in a wireless communication system may include identifying capability information of a terminal regarding two-dimensional (2D) precoding, in case that the terminal supports the 2D precoding, selecting the 2D precoding, based on information on a channel with the terminal, and transmitting an index indicating the 2D precoding to the terminal, wherein the 2D precoding is applied to at least one of an uplink signal or a downlink signal.

According to various embodiments of the disclosure, a method performed by a terminal in a wireless communication system may include identifying capability information of a base station two-dimensional (2D) precoding, in case that the base station supports the 2D precoding, selecting first 2D precoding, based on information on a channel with the base station, transmitting information on the first 2D precoding to the base station, and receiving an index indicating second 2D precoding from the base station, wherein the 2D precoding is applied to at least one of an uplink signal or a downlink signal.

According to various embodiments of the disclosure, a base station in a wireless communication system may include a transceiver, and at least one controller connected to the transceiver, wherein the at least one controller is configured to identify capability information of a terminal regarding two-dimensional (2D) precoding, in case that the terminal supports the 2D precoding, select the 2D precoding, based on information on a channel with the terminal, and transmit an index indicating the 2D precoding to the terminal, wherein the 2D precoding is applied to at least one of an uplink signal or a downlink signal, and wherein the second 2D precoding is determined based on the first 2D precoding.

According to various embodiments of the disclosure, a terminal in a wireless communication system may include a transceiver, and at least one controller connected to the transceiver, wherein the at least one controller is configured to identify capability information of a base station regarding two-dimensional (2D) precoding, in case that the base station supports the 2D precoding, select first 2D precoding, based on information on a channel with the base station, transmit information on the first 2D precoding to the base station, and receive an index indicating second 2D precoding from the base station, wherein the 2D precoding is applied to at least one of an uplink signal or a downlink signal, and wherein the second 2D precoding is determined based on the first 2D precoding.

### [Advantageous Effects of Invention]

Various embodiments of the disclosure provide an apparatus and a method capable of effectively providing services in a wireless communication system. More specifically, according to various embodiments of the disclosure, when transmitting and receiving uplink data or downlink data, a base station or a terminal may select appropriate 2D precoding by considering a characteristic of a channel.

In addition, appropriate two-dimensional (2D) precoding is selected, whereby the sparsity of a channel experienced by data may be reduced. Therefore, there may be a gain in terms of channel estimation, and the complexity of a receiver may be reduced.

Advantageous effects obtainable from the disclosure are not limited to the above-mentioned effects, and other effects which are not mentioned herein will be clearly understood from the following description by those skilled in the art to which the disclosure pertains .

### [Brief Description of Drawings]

FIG. 1 illustrates an example of a wireless communication environment according to embodiments of the disclosure;
FIG. 2 illustrates an example of a structure of a base station in a wireless communication system according to embodiments of the disclosure.
FIG. 3 illustrates an example of a structure of a UE in a wireless communication system according to embodiments of the disclosure.
FIG. 4 illustrates the sparsity of a channel according to two-dimensional (2D) precoding related to embodiments of the disclosure.
FIG. 5 illustrates an example of an orthogonal time frequency space (OTFS) related to embodiments of the disclosure.
FIG. 6 illustrates a 2D precoding selection procedure of a base station according to embodiments of the disclosure.
FIG. 7 illustrates a procedure of identifying 2D precoding capability information of a terminal according to embodiments of the disclosure.
FIG. 8 illustrates an example of information on 2D precoding combinations according to embodiments of the disclosure.
FIG. 9 illustrates a 2D precoding selection procedure using a pilot symbol according to embodiments of the disclosure.
FIG. 10 is an operation flowchart for 2D precoding selection according to embodiments of the disclosure.
FIG. 11 illustrates a procedure of receiving a downlink signal according to embodiments of the disclosure.
FIG. 12 illustrates a procedure of transmitting an uplink signal according to embodiments of the disclosure.
FIG. 13 illustrates a 2D precoding selection procedure of a terminal according to embodiments of the disclosure.
FIG. 14 is an operation flowchart for 2D precoding selection according to embodiments of the disclosure.
FIG. 15 illustrates a 2D precoding selection procedure of a base station according to embodiments of the disclosure.

With regard to the description of the drawings, the same or like reference signa may be used to designate the same or like elements.

### [Mode for the Invention]

The terms used in the disclosure are used merely to describe particular embodiments, and may not be intended to limit the scope of other embodiments. Expressions in the singular may include expressions in the plural unless the context clearly indicates otherwise. The terms used herein, including technical and scientific terms, may have the same meaning as those commonly understood by a person skilled in the art to which the disclosure pertains. Among the terms user herein, such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., control unit, processor, artificial intelligence (AI) model, encoder, decoder, autoencoder (AE), and neural network (NN) model) and terms referring to data (e.g., signal, feedback, report, reporting, information, parameter, value, bit, and codeword) are illustratively used for the sake of descriptive convenience. Therefore, the disclosure is not limited by the terms as used below, and other terms having equivalent technical meanings may be used.

Furthermore, various embodiments of the disclosure will be described using terms employed in some communication standards (e.g., the 3rd generation partnership project (3GPP)), but they are for illustrative purposes only. Various embodiments of the disclosure may also be easily applied to other communication systems through modifications.

As used hereinafter, a downlink channel may be one of a physical downlink control channel (PDCCH) or a physical downlink shared channel (PDSCH). As used herein, an uplink channel may be one of a physical uplink control channel (PUCCH) or a physical uplink shared channel (PUSCH). In addition, as used hereinafter, uplink data may be data transmitted and/or received on the above-described uplink channel, and downlink data may be data transmitted and/or received on the above-described downlink channel

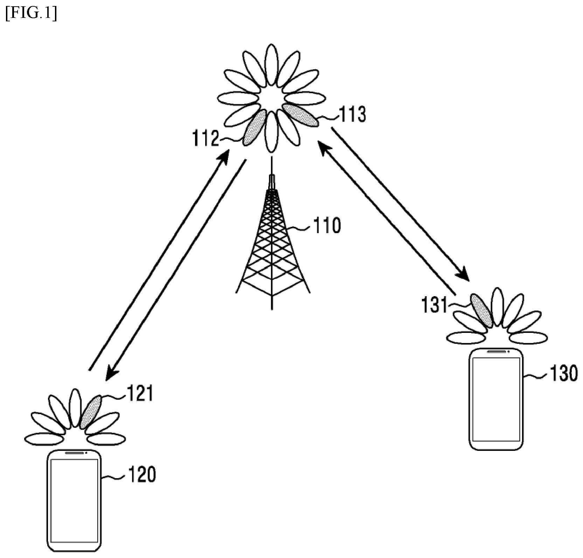

FIG. 1 illustrates a wireless communication system according to various embodiments of the disclosure; FIG. 1 illustrates a base station 110, a user equipment (UE) 120, and a UE 130 as some of nodes using radio channels in a wireless communication system. Although FIG. 1 illustrates only one base station, other base stations identical or similar to the base station 110 may be further included.

The base station 110 is a network infrastructure configured to provide the UEs 120 and 130 with radio accesses. The base station 110 has coverage which is defined as a certain geographical area, based on the distance over which the base station can transmit a signal. In addition to the term "base station", the base station 110 may be referred to as the term "access point (AP)", "eNodeB (eNB)", "gNodeB (gNB)", "5th generation node (5G node)", "6th generation node (6G node)", "wireless point", "transmission/reception point (TRP)", or other terms having technical meanings equivalent thereto.

Each of the UE 120 and the UE 130 is a device used by a user and performs communication with the base station 110 via a radio channel. In some cases, at least one of the UE 120 and the UE 130 may be operated without the user's intervention. That is, at least one of the UE 120 and the UE 130 may be a device performing machine type communication (MTC), and may not be carried by a user. In addition to the term "user equipment (UE", the UE 120 and the UE 130 may be each referred to as the term "terminal", "mobile station", "subscriber station", "customer-premises equipment (CPE)", "remote terminal", "wireless terminal", "electronic device", "user device", or other terms having technical meanings equivalent or similar thereto.

The base station 110, the UE 120, and the UE 130 may transmit and receive wireless signals in millimeter wave (mmWave) bands (e.g., 28GHz, 30GHz, 38GHz, 60GHz, and over 60GHz). With regard to this, the base station 110, the UE 120, and the UE 130 may perform beamforming in order to improve channel gain. Here, the beamforming may include transmission beamforming and reception beamforming. That is, the base station 110, the UE 120, and the UE 130 may assign directivity to transmission or reception signals. To this end, the base station 110 and the UEs 120 and 130 may select serving beams 112, 113, 121, and 131 through a beam search or beam management procedure. After the serving beams 112, 113, 121, and 131 are selected, subsequent communication may be performed through resources having a quasi-co-located (QCL) relationship with resources used to transmit the serving beams 112, 113, 121, and 131.

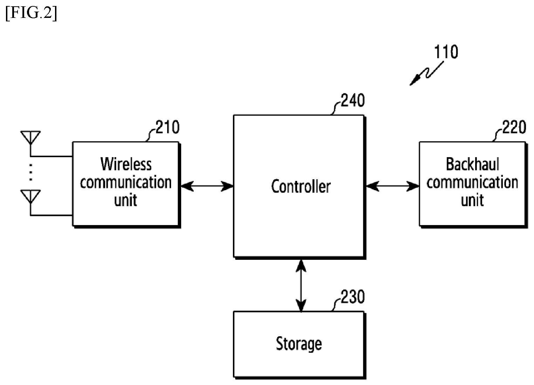

FIG. 2 illustrates an example of a structure of a base station in a wireless communication system according to embodiments of the disclosure. According to various embodiments of the disclosure, the base station 110 may be referred to as a network for the sake of convenience. The structure illustrated in FIG. 2 may be understood as a structure of the base station 110. As used herein, such terms as "... unit" and "-er" refer to a unit configured to process at least one function or operation, and may be implemented as hardware, software, or a combination of hardware and software.

Referring to FIG. 2, the base station 110 may include a wireless communication unit 210, a backhaul communication unit 220, a storage 230, and a controller 240.

The wireless communication unit 210 performs functions for transmitting/receiving signals through radio channels. For example, the wireless communication unit 210 performs functions for conversion between baseband signals and bitstrings according to the physical layer specifications of the system. For example, during data transmission, the wireless communication unit 210 generates complex symbols by encoding and modulating a transmission bitstream. In addition, during data reception, the wireless communication unit 210 restores a received bitstring by demodulating and decoding a baseband signal. In addition, the wireless communication unit 210 up-converts a baseband signal into a radio frequency (RF) band signal, transmits the same through an antenna, and down-converts an RF band signal received through the antenna into a baseband signal.

To this end, the wireless communication unit 210 may include a transmission filter, a reception filter, an amplifier, a mixer, an oscillator, a digital-to-analog converter (DAC), an analog-to-digital converter (ADC), or the like. Also, the wireless communication unit 210 may include multiple transmission/reception paths. Furthermore, the wireless communication unit 210 may include at least one antenna array configured by multiple antenna elements. In terms of hardware, the wireless communication unit 210 may be configured by a digital unit and an analog unit, and the analog unit may be configured by multiple sub-units according to the operating power, operating frequency, etc.

The wireless communication unit 210 may transmit/receive signals. To this end, the wireless communication unit 210 may include at least one transceiver. For example, the wireless communication unit 210 may transmit a synchronization signal, a reference signal, system information, a message, control information, data, or the like. In addition, the wireless communication unit 210 may perform beamforming.

The wireless communication unit 210 transmits and receives signals as described above. Accordingly, all or part of the wireless communication unit 210 may be referred to as "transmitter", "receiver", or "transceiver". In addition, as used in the following description, the meaning of "transmission and reception performed through a radio channel" include the meaning that the above-described processing is performed by the wireless communication unit 210.

The backhaul communication unit 220 provides an interface for communicating with other nodes in the network. That is, the backhaul communication unit 220 converts bitstrings transmitted from the base station 110 to other nodes, for example, other access nodes, other base stations, upper-layer nodes, core networks, and the like into physical signals, and converts physical signals received from other nodes into bitstrings.

The storage 230 stores basic programs, application programs, and data, such as configuration information, for the operation of the base station 110. The storage 230 may include a memory. The storage 230 may be configured by a volatile memory, a nonvolatile memory, or a combination of a volatile memory and a nonvolatile memory. In addition, the storage 230 may provide the stored data at the request of the controller 240.

The controller 240 controls the overall operation of the base station 110. For example, the controller 240 transmits/receives signals through the wireless communication unit 210 or the backhaul communication unit 220. In addition, the controller 240 records data in the storage 230 and reads the data from the storage 230. The controller 240 may also perform functions of a protocol stack required by communication specifications. The controller 240 may include at least one processor.

Although not illustrated in FIG. 2, according to various embodiments of the disclosure, the base station 110 may further include a reception device for performing the embodiments of the disclosure. Specifically, the reception device may be included in the wireless communication unit 210 or may be included in the base station 110 separately from the wireless communication unit 210. Alternatively, the reception device may be located outside the base station 110 and may be wirelessly or wiredly connected to the base station 110. The reception device may include at least one receiver. In addition, the controller 240 may control the reception device to perform embodiments of the disclosure as described below.

The structure of the base station 110 illustrated in FIG. 2 is merely an example of the base station, and examples of the base station for performing various embodiment of the disclosure are not limited to the structure illustrated in FIG. 2. That is, according to various embodiments, some components may be added, deleted, or modified.

Although the base station is described as a single entity in FIG. 2, the disclosure is not limited thereto. The base station according to various embodiments of the disclosure may be implemented to form an access network that has distributed deployment, in addition to integrated deployment. According to an embodiment, the base station may be divided into a central unit (CU) and a digital unit (DU), the CU may be implemented to perform upper layer functions (e.g., radio link control (RLC), packet data convergence protocol (PDCP), and radio resource control (RRC)), and the DU may be implemented to perform lower layer functions (e.g., medium access control (MAC) and physical (PHY)). The DU of the base station may form beam coverage on a radio channel.

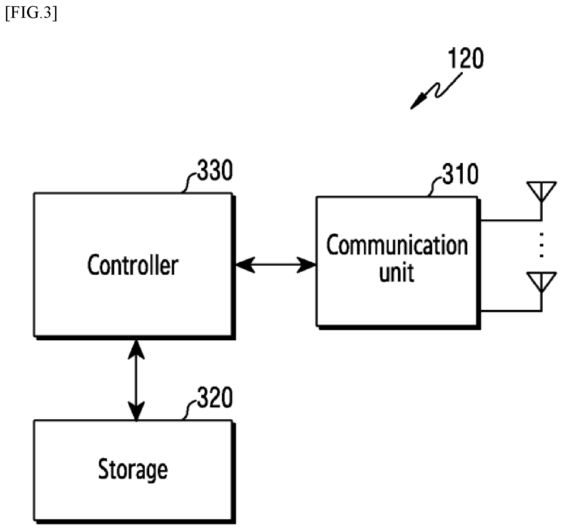

FIG. 3 illustrates a structure of a UE in a wireless communication system according to various embodiments of the disclosure. The structure illustrated in FIG. 3 may be understood as a structure of the UE 120. As used herein, such terms "... unit" and "-er" refer to a unit configured to process at least one function or operation, and may be implemented as hardware, software, or a combination of hardware and software.

Referring to FIG. 3, the UE may include a communication unit 310, a storage 320, and a controller 330.

The communication unit 310 performs functions for transmitting/receiving signals through radio channels. For example, the communication unit 310 performs functions of conversion between baseband signals and bitstrings according to the physical layer specifications of the system. For example, during data transmission, the communication unit 310 encodes and modulates a transmitted bitstring to generate complex symbols. In addition, during data reception, the communication unit 310 restores a received bitstring by demodulating and decoding a baseband signal. In addition, the communication unit 310 up-converts a baseband signal into a radio frequency (RF) band signal, transmits the same through an antenna, and down-converts an RF band signal received through the antenna into a baseband signal. For example, the communication unit 310 may include a transmission filter, a reception filter, an amplifier, a mixer, an oscillator, a DAC, an ADC, etc.

Also, the communication unit 310 may include multiple transmission/reception paths. Furthermore, the communication unit 310 may include at least one antenna array configured by multiple antenna elements. In terms of hardware, the communication unit 310 may include a digital circuit and an analog circuit (e.g., radio frequency integrated circuit (RFIC)). Here, the digital circuit and the analog circuit may be implemented as a single package. In addition, the communication unit 310 may include multiple RF chains. Furthermore, the communication unit 310 may perform beamforming.

The communication unit 310 transmits and receives signals as described above Accordingly, all or part of the communication unit 310 may be referred to as a transmitter, a receiver, or a transceiver. In addition, as used in the following description, the meaning of "transmission and reception performed through a radio channel" may include the meaning that the above-described processing is performed by the communication unit 310.

The storage 320 stores basic programs, application programs, and data, such as configuration information, for the operation of the UE. The storage 320 may be configured by a volatile memory, a nonvolatile memory, or a combination of a volatile memory and a nonvolatile memory. In addition, the storage 320 provides the stored data at the request of the controller 330.

The controller 330 controls the overall operation of the UE. For example, the controller 330 transmits and receives signals through the communication unit 310. In addition, the controller 330 records data in the storage 320 and reads the data from the storage 320. In addition, the controller 330 may perform functions of protocol stacks required by communication specifications. To this end, the controller 330 may include at least one processor or microprocessor, or may be a part of a processor. In addition, a part of the communication unit 310 and the controller 330 may be referred to as a communication processor (CP).

According to various embodiments, the controller 330 may control the UE to perform operations according to various embodiments as described below.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The structure of the UE 120 illustrated in FIG. 3 is merely an example of the UE, and examples of a UE for performing various embodiments of the disclosure are not limited to the structure illustrated in FIG. 3. That is, according to various embodiments, some components may be added, deleted, or modified.

Meanwhile, as a mobile communication (or wireless communication) standard, orthogonal frequency division multiplexing (hereinafter, OFDM) waveform has been adopted in 3GPP long-term evolution (LTE). In an initial stage of standardization of new radio (NR), new waveforms capable of compensating for various disadvantages of existing OFDM had been proposed as candidates. However, 3GPP selected OFDM as a waveform also in NR. Recently, for standardization of a sixth-generation mobile communication system (hereinafter, a 6G communication system), key performance indicators (KPIs) used in standardization of the NR communication system are expected to be changed to more challenging values. In addition, the 6G communication network is expected to support more various use cases than the NR communication system. Therefore, in order to support various use cases, a waveform may need to be highly flexible. Accordingly, in order to support various use cases, a new waveform or a modified waveform of OFDM compatible with the OFDM waveform may be adopted.

In particular, in standards of the NR communication system and the 6G communication system, support of not only a high-speed train channel having a speed of several hundred km/h but also a non-terrestrial network (NTN), mobility of which may be higher than that of the high-speed train channel, together with a terrestrial network (TN), has emerged as an important issue. An orthogonal time-frequency-space (OTFS) waveform may be a new waveform for solving the above-described problems. In a high-mobility environment, when an existing OFDM waveform robust against frequency-selective fading is used, significant performance degradation may occur because the existing OFDM waveform is not robust against time-selective fading. For example, the existing OFDM waveform may be highly vulnerable to a Doppler effect occurring in an environment in which a receiver moves. In addition, in the case of the OFDM waveform, in order to process a frequency shift caused by the Doppler effect, the receiver may require a complicated Doppler compensation algorithm. In addition, the Doppler compensation algorithm may increase the complexity of the receiver. In OTFS, a signal may be processed in a delay-Doppler domain by using a symplectic finite Fourier transform (SFFT). In addition, in OTFS, a frequency shift caused by Doppler may be effectively processed with low complexity. Hereinafter, in an embodiment of the disclosure, characteristics of OTFS as a new waveform to which two-dimensional precoding is applied and methods for selecting and applying OTFS may be described.

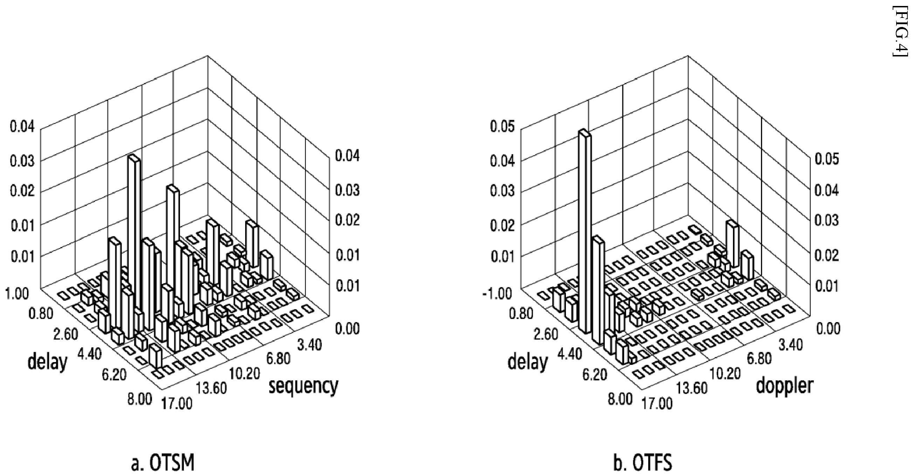

FIG. 4 illustrates the sparsity of a channel according to two-dimensional (2D) precoding related to embodiments of the disclosure.

Referring to FIG. 4, characteristics of graphs regarding an OTFS waveform and an orthogonal time sequence multiplexing (OTSM) waveform may be described. Two-dimensional (2D) precoding (hereinafter, referred to as 2D precoding) may be applied to an existing OFDM waveform. Therefore, in a case where the 2D precoding is applied, the OFDM waveform may be represented as graphs of (a) OTFS and (b) OTSM in FIG. 4. The 2D precoding may be fast Fourier transform (inverse fast Fourier transform (IFFT)), Walsh Hadamard transform (hereinafter, WHT), or sparse Walsh Hadamard (hereinafter, SWH). The 2D precoding may have a difference in complexity. For example, the IFFT may have high complexity because the IFFT includes a complex number. In contrast, the WHT may have lower complexity than the IFFT because the WHT is configured by only -1 and 1. In addition, the SWH may have lower complexity than the WHT because the SWH is configured by only 0 and 1. However, a type of the 2D precoding is not limited to the above examples. In addition, in an embodiment of the disclosure below, the 2D precoding is not specified as any one particular type, and may refer to a method for selecting arbitrary 2D precoding such as the above-described examples.

More specifically, according to a type of the 2D precoding, a channel form of a transformed domain (e.g., a delay-Doppler domain) obtained from a time-frequency (TF) domain channel may be represented as in FIG. 4. For example, in the delay-Doppler domain, OTFS may have lower sparsity (or higher degree of localization) than OTSM. In this case, the smaller the sparsity, the more advantageous for channel estimation. In addition, even when the sparsity is low, when each element configures a unitary matrix having a constant modulus characteristic, there may be no difference in an error rate, but complexity during equalization may decrease. Furthermore, OTFS may have an advantage in terms of separability or degrees of freedom (DoF) of a channel. In addition, OTFS may have an advantage in terms of stability according to the feature of changing very slowly compared to the time-frequency domain. As described above, the advantages of OTFS may ultimately result in an effect of reducing the complexity of a receiver. Hereinafter, in an embodiment of the disclosure, operations of a base station and a UE for adaptively selecting and operating 2D precoding to use OTFS may be described.

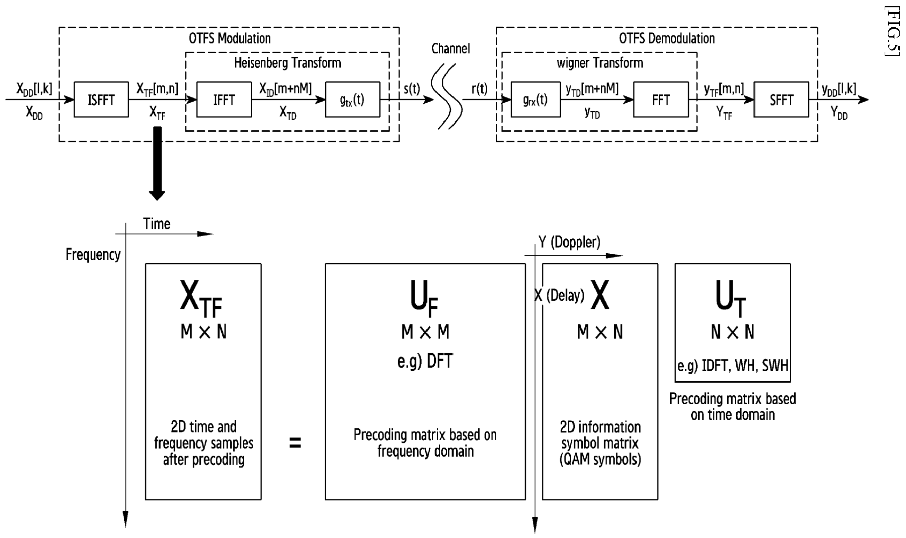

FIG. 5 illustrates an example of OTFS related to embodiments of the disclosure.

Referring to FIG. 5, a method of representing a method in which 2D precoding is applied to OFDM by an equation will be described. As an example of generating a transmission signal as an OTFS waveform, an OTFS transmitter may generate a continuous-time signal on a frame basis. In this case, a design requirement may be that a channel changes little in the delay-Doppler domain during one frame time. For example, when the transmitter transmits J frames, a transmission signal may be expressed by the following Equation 1. [Equation 1] ${\sum }_{j = 0}^{J - 1} {s}^{\left(j\right)} \left(t-{jT}_{F}\right)$

In Equation 1, *s*^{(*j*)}(*t*) may be a component of a j-th frame signal in the transmission signal, and *T_{F}* may be a common frame period. Since the generation method of each frame signal is the same, for the sake of convenience, the following description regarding a signal generation method of the 0-th frame may also apply to a description regarding the signal of the j-th frame. Therefore, in the following description, (j) may be omitted, and a generation method of *s*(*t*) may be described. A general model of the OTFS transmitter and a reception signal may be given as in FIG. 5, and FIG. 5 may represent three necessary transformations used when transmitting one frame.

First, the transmitter may perform serial-to-parallel (S/P) conversion on a data symbol sequence *x*[*n*], and may arrange a pilot symbol to generate an M-by-N (or MxN) matrix *X_{dd}* in the delay-Doppler domain (DD domain). The matrix ***X**_{dd}* is a 2D information symbol matrix (quadrature amplitude modulation (QAM) symbols) and may include actual data. In addition, the transmitter may perform inverse symplectic finite Fourier transform (ISFFT) on the delay-Doppler domain symbol matrix ***X**_{dd}* to generate a time-frequency domain sample matrix ***X**_{tf}* having the same size. A process of generating the time-frequency domain sample matrix ***X**_{tf}* may be a two-dimensional orthogonal transformation for obtaining an MxN sample matrix ***X**_{tf}* by multiplying an M-point discrete Fourier transform (DFT) matrix on the left side of the delay-Doppler domain matrix *X_{dd}* and multiplying an N-point inverse DFT (IDFT) matrix on the right side thereof. For example, a relation between ***X**_{dd}*[*m, n*], which is an (m,n)-th element of ***X**_{dd},* and ***X**_{tf}*[*l, k*], which is an (l,k)-th element of ***X**_{tf},* may be represented as in Equation 2 below. [Equation 2] ${X}_{tf} \left[l, k\right] = \frac{1}{\sqrt{NM}} {\sum }_{N = 0}^{N - 1} {\sum }_{m = 0}^{M - 1} {X}_{dd} \left[m, n\right] {e}^{j 2 π \left(\frac{nk}{M}-\frac{ml}{M}\right)}$

Heisenberg transform may be mathematically identical to applying, to the time-frequency domain matrix ***X**_{tf},* a pulse-shaped orthogonal frequency division multiplexing (OFDM) modulation process performed by the OFDM transmitter after S/P conversion of the symbol sequence. For example, in the Heisenberg transform, a continuous-time signal s(t) may be generated through Equation 3 below. [Equation 3] $s \left(t\right) ≜ {\sum }_{k = 0}^{N - 1} {\sum }_{l = 0}^{M - 1} {X}_{tf} \left[l, k\right] {g}_{tx}^{\left(k\right)} \left(t-{T}^{\left(k\right)}\right) {e}^{j 2 πl Δ f \left(t-{T}^{\left(k\right)}\right)}$

A process of Equation 3 may be regarded as a generalized pulse-shaped OFDM modulation process in which symbols in an l-th row of ***X**_{tf}* are allocated to a first sub-carrier, and a k-th OFDM symbol is generated with k-th symbols. Here, Δ*f* may be a subcarrier spacing, ${g}_{tx}^{\left(k\right)} \left(t\right)$ may be a transmit pulse of the k-th OFDM symbol, and *T*^{(*k*)} may be a delay time of the k-th transmit pulse. If ${g}_{tx}^{\left(k\right)} \left(t\right) = {g}_{tx} \left(t\right)$ *,* ∀*k* and *T*^{(*k*)} *= kT, Vk,* the above-described Equation 3 may be simplified as in Equation 4 below. [Equation 4] $s \left(t\right) = {\sum }_{k = 0}^{N - 1} {\sum }_{l = 0}^{M - 1} {X}_{tf} \left[l, k\right] {g}_{tx} \left(t-kT\right) {e}^{j 2 πl Δ f \left(t-kT\right)}$

Equation 4 may represent a method of transforming a time-frequency domain sample matrix ***X**_{tf}* into a continuous-time signal s(t) by means of a Heisenberg transform.

The transmitter may appropriately select ${g}_{tx}^{\left(k\right)} \left(t\right)$ and *T*^{(*k*)} in Equation 3 described above according to k, thereby achieving the effect of adding a symbol cyclic prefix (CP) to each column of ***X**_{tf}.* In addition, the transmitter may add only one frame cyclic prefix (CP) after performing parallel-to-serial (P/S) conversion on ***X**_{tf}* without a symbol CP in Equation 3, and may produce both effects by combining the above-described two methods. For convenience, the following description will be made using Equation 4.

When the generated OTFS signal s(t) passes through a channel, the generated OTFS signal may be received as a continuous-time signal r(t). In particular, after s(t) passes through a narrowband doubly-selective fading channel and is then received, when a transmitter performs a Wigner transform on r(t) and then performs SFFT, an output Y may be obtained as a delay-Doppler domain matrix obtained by two-dimensionally circularly convoluting the delay-Doppler domain symbol matrix ***X**_{dd}* with a two-dimensional channel matrix having a sparse impulse response in the delay-Doppler domain. Accordingly, when the OTFS receiver is capable of properly estimating parameters of a channel impulse response, the OTFS receiver may estimate data symbols in the delay-Doppler domain by using existing and new equalization techniques capable of performing two-dimensional (2D) deconvolution in the delay-Doppler domain.

Meanwhile, hereinafter, X_{dd} in Equation 2 is extended and referred to as X_{xy}. When signaling used in OTFS is generalized and represented in a form of a matrix, same may be represented as X_{tf} = *U_{F}*X_{dd}*U_{T}.* In this case, both X_{dd} and X_{xy} may be M × N matrices, *U_{F}* may be an M × M matrix, and an M-point DFT matrix may be used in OTFS. In addition, *U_{T}* may be an N × N matrix, and an N-point IDFT matrix may be used in OTFS. In addition, in OTSM, an existing DFT matrix may be used as *U_{F},* and WHT may be used as *U_{T}.* In addition, *U_{F}* and *U_{T}* may have constant modulus characteristics, and when the matrices are unitary matrices, error-rate performance of a receiver may be identical.

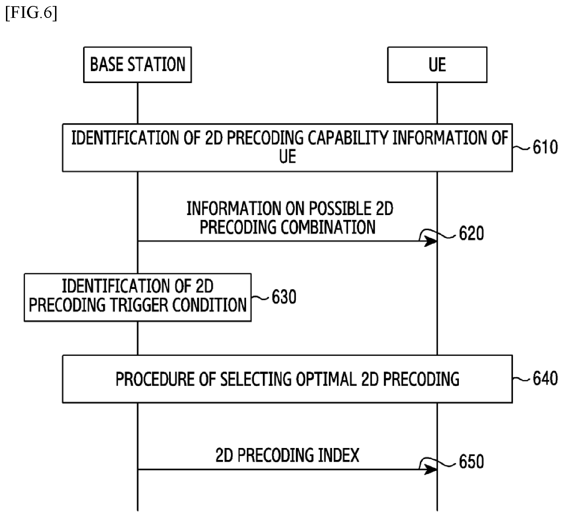

FIG. 6 illustrates a 2D precoding selection procedure of a base station according to embodiments of the disclosure.

Referring to FIG. 6, a method of configuring and signaling 2D precoding when a base station triggers a 2D precoding selection procedure may be described.

In operation 610, a base station may identify, through a higher layer message (e.g., a radio resource control (RRC) message), whether a UE has a 2D precoding capability. For example, the 2D precoding capability of the UE may indicate whether the UE supports 2D precoding. Operation 610 may include a process in which the base station transmits a message for inquiring a capability of the UE to the UE, and a process in which the UE transmits a message for responding to the base station with a capability of the UE.

In operation 620, the base station may transfer information on a possible 2D precoding combination to the UE. The information on the 2D precoding combination may include at least one of available 2D precoding combinations, based on whether the UE supports 2D precoding. In addition, the information on the 2D precoding combinations may be generated based on the capability of the UE identified in operation 610.

In operation 630, the base station may identify whether a 2D precoding trigger condition is satisfied. For example, a 2D precoding selection operation (e.g., operation 640 below) may be performed periodically, and in this case, the 2D precoding trigger condition may include whether a time corresponding to a predetermined period has elapsed since the last trigger. In addition, the 2D precoding selection operation may be performed if a specific condition is satisfied, based on a pre-configured value, and in this case, the 2D precoding trigger condition may include whether a corresponding value is satisfied (e.g., whether a predetermined measurement value is greater or smaller than a threshold value).

In operation 640, when the 2D precoding trigger condition is satisfied, the base station may select optimal 2D precoding. The base station may select optimal 2D precoding, based on a pilot symbol received from the UE.

In operation 650, the base station may transmit an index of the selected 2D precoding to the UE. The index value transmitted to the UE may be one of the index values included in the information on the combination of 2D precoding transmitted to the UE in operation 620.

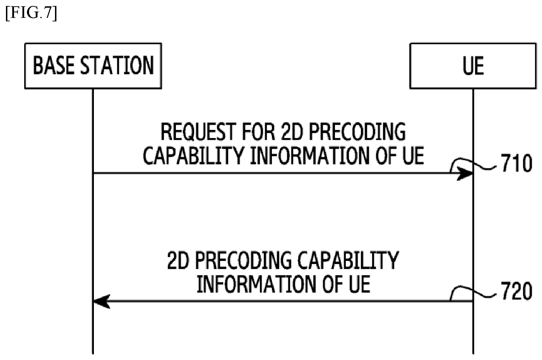

An operation of each of the operations described above may be described in detail with reference to FIG. 7 to FIG. 12 below. In addition, the disclosure is not limited to the above examples. Therefore, at least one of the operations described above may be omitted, and at least one new operation may be added and performed in combination and conjunction with the operations described above. In addition, some of the operations described above may be combined into at least one operation or divided into two or more operations.

FIG. 7 illustrates a procedure of identifying 2D precoding capability information of a UE according to embodiments of the disclosure.

Referring to FIG. 7, an operation of identifying whether a UE has a 2D precoding capability in operation 610 described above may be described in detail.

In operation 710, the base station may request, from the UE, capability information (e.g., UE_2DPrecoding_Capability) on 2D precoding of the UE. For example, the base station may transmit a UECapabilityEnquiry message to the UE in order to request the capability information on 2D precoding of the UE. In this case, a request for the capability information on 2D precoding of the UE may be included in a higher layer message (e.g., an RRC message).

In operation 720, the UE may transmit a response to the request for the capability information received from the base station to the base station. For example, the UE may transmit a UECapabilityResponse message to the UE in order to transfer the capability information on 2D precoding to the base station. In addition, the response of the UE may be included in the form of UE_2DPrecoding_Capability = BOOLEAN {Enabled, Disabled} or may be included in the form of UE_2DPrecoding_Capability = ENUMERATED {true}. In addition, the response of the UE may be included in a higher layer message (e.g., an RRC message). In an embodiment, the UE may transmit the response to the base station, based on 2D precoding support information pre-configured (or installed) in the UE. For example, if the UE does not support 2D precoding (e.g., UE_2DPrecoding_Capability = {Disabled} or non-inclusion of UE_2DPrecoding_Capability), the base station may stop a 2D precoding selection procedure according to the response of the UE, and transmit and/or receive data, based on existing OFDM. For example, if the UE supports 2D precoding (e.g., UE_2DPrecoding_Capability = {Enabled} or UE_2DPrecoding_Capability = {true}), the base station may perform the 2D precoding selection procedure according to an embodiment of the disclosure. Thereafter, according to selection of 2D precoding, the base station may transmit and/or receive data to and/or from the UE, based on OTFS.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

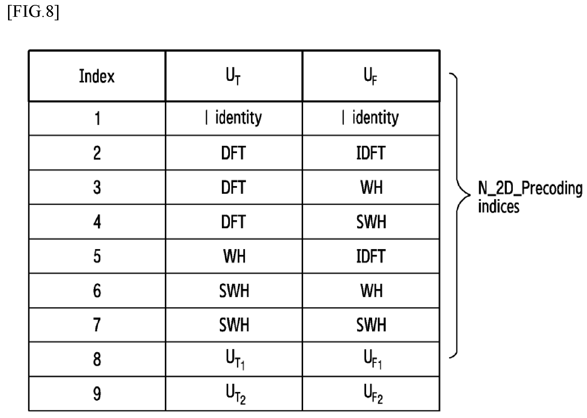

FIG. 8 illustrates an example of information on 2D precoding combinations according to embodiments of the disclosure.

Referring to FIG. 8, the information on the 2D precoding combination transferred by the base station to the UE in operation 620 described above may be described. Information on available 2D precoding combinations may be expressed in the form of a table shown in FIG. 8. For example, the information on the available 2D precoding combinations may include 2DPreIndex, and each combination of U_{T} and U_{F}. 2DPreIndex may refer to each index of combinations of U_{T} and U_{F}. In addition, U_{T} may refer to a precoding matrix (unitary matrix) according to the frequency domain, and U_{F} may refer to a precoding matrix (unitary matrix) according to the time domain. The information on the available 2D precoding combinations may be composed of N_2D_Precoding elements, and N_2D_Precoding may indicate that N_2D_Precoding combinations of U_{T} and U_{F} are available. For example, in FIG. 8, U_{T} and U_{F} may be one of a unit matrix, an identity matrix, DFT, WH, or SWH. However, FIG. 8 is merely an example of the information on the available 2D precoding combinations, and the information on the available 2D precoding combinations is not limited to the example of FIG. 8.

In an embodiment, the base station may transmit, to the UE, information on available 2D precoding combinations, based on the 2D precoding capability information of the UE received from the UE as described above with reference to FIG. 7. For example, when the UE supports 2D precoding, the base station may transfer information on available 2D precoding combinations to the UE. The table of FIG. 8 may be included in a higher layer message (e.g., an RRC message).

In an embodiment, the information on the available 2D precoding combinations may be pre-configured (or installed) in the UE. Therefore, the base station may not need to transfer the information on the available 2D precoding combinations to the UE.

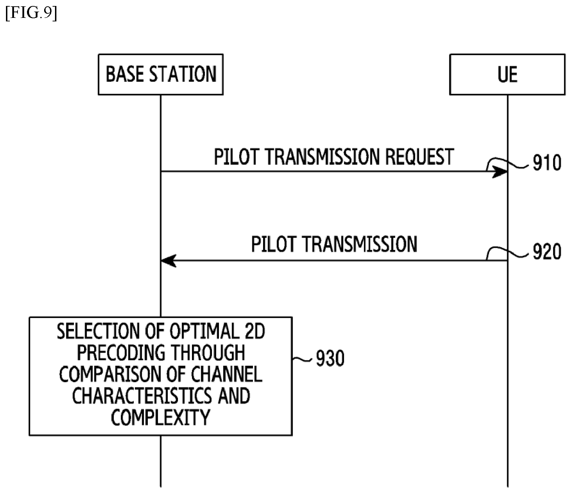

FIG. 9 illustrates a 2D precoding selection procedure using a pilot symbol according to embodiments of the disclosure.

Referring to FIG. 9, an operation of, when a 2D precoding trigger condition is satisfied, selecting optimal 2D precoding by the base station in operation 640 described above may be described in detail.

First, the base station may identify whether a 2D precoding trigger condition is satisfied. In an embodiment, a 2D precoding selection operation (e.g., operation 640) may be configured to be periodically performed. For example, the base station may perform the 2D precoding selection operation every 10ms. A value (e.g., N_Period_2Dprecoding) for a period of the 2D precoding selection operation of the base station may be configured or indicated from an upper layer (e.g., RRC layer or MAC layer) or may be a value pre-configured (or fixed) in the base station. In an embodiment, the 2D precoding selection operation (e.g., operation 640) may be configured to be performed when a specific event occurs. For example, the base station may perform the 2D precoding selection operation when a Doppler shift value (e.g., *f_{D}*) estimated based on a pilot symbol received from the UE is equal to or greater than (or exceeds) a threshold value (e.g., *f_{D,Th}*). For example, when *f_{D}* > *f*_{*D*,*Th*}, the 2D precoding selection operation may be performed. The threshold value (e.g., *f*_{*D*,*Th*}) may be calculated based on a carrier frequency and a target velocity. In addition, the threshold value (e.g., *f*_{*D*,*Th*}) may be configured or indicated from an upper layer (e.g., an RRC layer or a MAC layer) or may be a value pre-configured (or installed) in the base station. When the 2D precoding trigger condition described above is satisfied, the base station may perform operations for selecting optimal 2D precoding.

In operation 910, the base station may request the UE to transmit a pilot symbol to identify a characteristic of a channel with the UE. An operation of requesting the pilot symbol may be performed to identify a statistical channel characteristic rather than an instantaneous channel characteristic. In addition, since the request for the pilot symbol is not for data decoding, overhead may not occur even when the request for the pilot symbol is transmitted in units of several hundred milliseconds to several seconds. In this case, the request for the pilot symbol may be transmitted through a control channel (e.g., a PDCCH). For example, the request for the pilot symbol may be included in control information (e.g., downlink control information (DCI)), and the request for the pilot symbol may include at least one of pieces of information on a transmission time of the pilot symbol or a frequency resource for transmission of the pilot symbol. In addition, the pilot symbol may be an existing reference signal (e.g., including at least one of a channel state information (CSI)-RS or a demodulation (DM)-RS) or a newly defined pilot. For example, the newly defined pilot may include a guard band (or guard frequency) and may include consecutive pilot symbols in the time domain. The base station may be able to perform more accurate channel estimation through the consecutive pilot symbols in the time domain.

In operation 920, the UE may transmit the pilot symbol to the base station, based on the request for the pilot symbol received from the base station. For example, after receiving a request to transmit a pilot symbol from the base station, the UE may decode control information (e.g., DCI). In addition, the UE may transmit the pilot symbol to the base station according to a transmission time and/or a frequency resource included in the control information (e.g., DCI).

In operation 930, the base station may identify a channel characteristic and complexity through the pilot symbol received from the UE and select optimal 2D precoding. For example, the base station may receive a pilot symbol from the UE and estimate a channel H*_{ft}*. In addition, the base station may select optimal 2D precoding (*U_{T}*, *U_{F}*) based on at least one of the estimated channel H*_{ft}* or the calculation complexity of each precoder.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

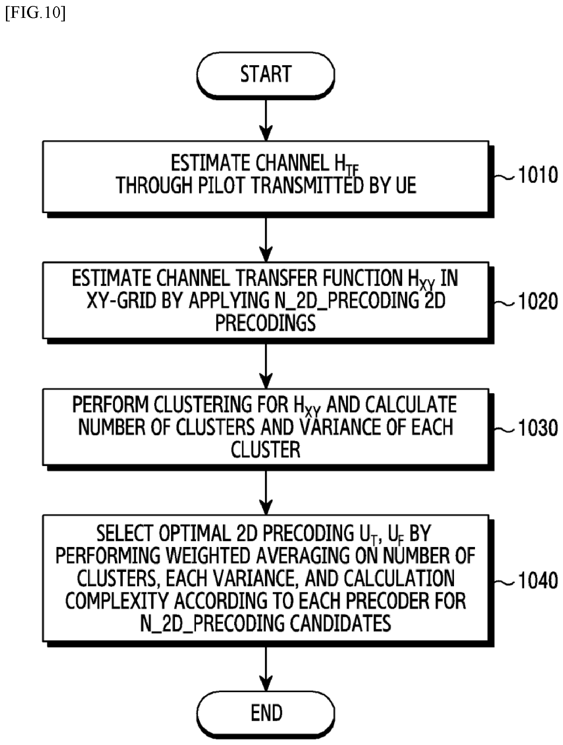

FIG. 10 illustrates an operation sequence of 2D precoding selection according to embodiments of the disclosure.

Referring to FIG. 10, a procedure for selecting, by the base station, optimal 2D precoding, based on the pilot symbol received from the UE in operation 930 described above, may be described in detail.

In operation 1010, the base station may receive a pilot symbol from the UE and estimate a channel H*_{ft}*. For example, the base station may perform channel estimation based on a least square (LS) or minimum mean square error (MMSE) scheme for a resource element (RE) including the pilot symbol for the *H*_{ft} estimation. The base station may perform interpolation for the remaining REs. Therefore, as described above with reference to FIG. 9, in order to improve the accuracy of channel estimation, a newly defined pilot symbol may be used.

In operation 1020, the base station may perform inverse 2D precoding using each 2D precoding combination for H*_{ft}* that is a time-frequency domain channel. The base station may acquire H*_{xy}* that is a channel transfer function of a x-y domain channel. For example, H*_{xy}* may be expressed as in Equation 5 below. [Equation 5] ${H}_{xy} = {U}_{F}^{- 1} {H}_{ft} {U}_{T}^{- 1}$

For example, in a case where M-point DFT *U_{F}* = *F_{M}* and N-point IDFT ${U}_{F} = {F}_{N}^{- 1}$ as in OTFS, when SFFT is applied to the estimated H*_{ft}*, same is transformed onto a delay-Doppler grid so that a channel (e.g., *H_{DD}*) in the delay-Doppler domain may be calculated. For example, when IFFT (on the left side) and inverse Walsh Hadamard transform (IWHT) (on the right side) are applied to the estimated H*_{ft}*, same is transformed onto a delay-sequency grid so that a channel (e.g., *H_{DS}*) in the delay-sequency domain may be calculated.

In operation 1030, the base station may perform clustering for H*_{xy}* that is a M × N matrix, and calculate the number of clusters and a variance of each cluster. For example, the base station may identify up to M data groups for H*_{xy}* that is a M × N matrix, based on the x-axis. In addition, the base station may identify up to N data groups for H*_{xy}* that is a M × N matrix, based on the y-axis. In addition, the base station may calculate the variance for each of multiple data groups. The base station may measure sparsity on each of the x-axis and the y-axis by using the number of clusters and the variance of each cluster.

In operation 1040, the base station may select optimal 2D precoding (*U_{T}*, *U_{F}*) by performing weighted averaging on the number of clusters, the variance of each cluster, and calculation complexity according to each precoder for N_2D_Precoding candidates (e.g., the available 2D precoding combinations in operation 620 described above). In this case, the optimal 2D precoding may be 2D precoding having a small number of clusters and low sparsity and complexity among the N_2D_Precoding candidates.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

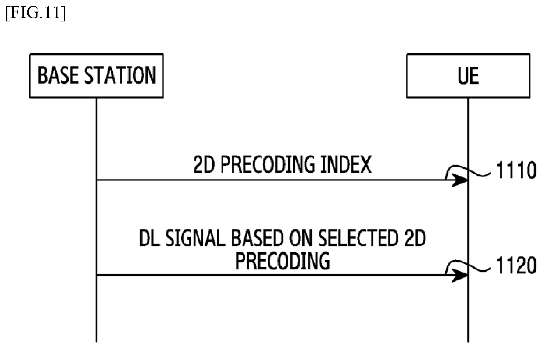

FIG. 11 illustrates a procedure of receiving a downlink signal according to embodiments of the disclosure.

Referring to FIG. 11, an operation in which a base station transmits an index of selected 2D precoding to a UE (e.g., operation 650) and transmits downlink data to the UE, based on the 2D precoding corresponding to the index may be described in detail.

In operation 1110, the base station may transmit an index of the optimal 2D precoding selected in operation 640 described above to the UE. Information on the index of the 2D precoding selected by the base station may be included in at least one of higher layer signaling (e.g., an RRC message or a MAC control element (CE)) or control information (e.g., DCI). In an embodiment, the base station may include, in an RRC message, a method (e.g., Indication_PDSCH_2D_precoding) of indicating 2D precoding to be used for transmission of downlink data. The base station may configure, through the RRC message, how to indicate a 2D precoding index to the UE.

In an embodiment, in a case where the base station indicates the selected 2D precoding to the UE through DCI (e.g., Indication_PDSCH_2D_precoding = {DCI}), the base station may transmit, to the UE, DCI including index information (e.g., Index_PDSCH_2D_precoding_DCI = {1, ..., N_2D_Precoding}) of the selected 2D precoding. After receiving the DCI from the base station, the UE may decode an Index_2D_precoding_DCI value to identify the index of the 2D precoding selected by the base station. In addition, in a case where the base station indicates the selected 2D precoding to the UE through DCI, dynamic switching between OFDM and OTFS, to which the 2D precoding selected by the base station is applied, may be possible. The base station may configure, through an RRC message (e.g., Cont_Util_PDSCH_2D_precoding = {Enabled, Disabled}), which mode (e.g., OFDM or OTFS, to which the 2D precoding selected by the base station is applied) to switch to. For example, when Cont_Util_PDSCH_2D_precoding = Enabled, this may indicate that the index of the selected 2D precoding is used until a newly updated 2D precoding index is received through subsequent DCI. On the other hand, when Cont_Util_PDSCH_2D_precoding = Disabled, this may indicate that the index of the selected 2D precoding may be valid for a valid time (e.g., N_valid_time = 10ms) after DCI reception and the mode is changed to the previously used OFDM after the valid time.

In an embodiment, in a case where the base station indicates the index of the selected 2D precoding to the UE through MAC signaling (e.g., a MAC control element (CE)) (e.g., Indication_PDSCH_2D_precoding = {MAC}), the base station may select one of N_2D_Precoding indices and transmit, to the UE, information on the index of the selected 2D precoding through MAC signaling (e.g., Index_PDSCH_2D_precoding_MAC = {1, ..., N_2D_Precoding}). In addition, in a case where the base station indicates the selected 2D precoding to the UE through MAC signaling, switching between OFDM and OTFS, to which the 2D precoding selected by the base station is applied, may be performed semi-statically through a MAC CE.

In an embodiment, in a case where the base station transfers the index of the selected 2D precoding to the UE through an RRC message (e.g., Indication_PDSCH_2D_precoding = {RRC}), the base station may inform the UE of information on the index of the selected 2D precoding through an RRC message (e.g., PDSCH-Config.2DPrecoding = {1, 2, ..., N_2D_Precoding}). For example, the base station may configure, through an RRC message, an index of 2D precoding to be used at the time of initial access (e.g., Msg 3 in a random access procedure) for the UE (e.g., RACH-ConfigCommon.msg3-2DPrecoding = {1, 2, ..., N_2D_Precoding}). In addition, the base station may configure, through an RRC message, an index of 2D precoding to be used in a PUSCH for the UE (e.g., PUSCH-Config.2DPrecoding ={1, 2, ..., N_2D_Precoding}). In an embodiment, in a case where the index of the selected 2D precoding is indicated to the UE through an RRC message, an index value of 1 may indicate OFDM, and any other value may indicate the UE to apply 2D precoding. In addition, in a case where the base station indicates the selected 2D precoding to the UE through an RRC message, switching between OFDM and OTFS, to which the 2D precoding selected by the base station is applied, may be performed statically through an RRC message.

In operation 1120, the UE may receive downlink data (e.g., data received on a PDSCH) from the base station. When decoding the received downlink data, the UE may use the information on the index of the 2D precoding received from the base station in operation 1110. For example, the UE may decode the downlink data through an inverse process for the 2D precoding (*U*_{T}, *U_{F}*) corresponding to the index value of the 2D precoding selected by the base station.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

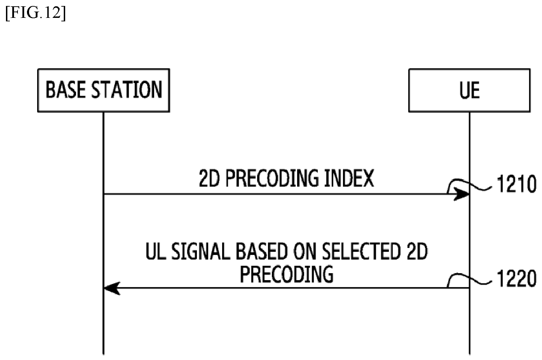

FIG. 12 illustrates a procedure of transmitting an uplink signal according to embodiments of the disclosure.

Referring to FIG. 12, an operation in which, when a base station transmits an index of selected 2D precoding to a UE (e.g., operation 650 described above), the UE transmits uplink data to the base station, based on the 2D precoding corresponding to the index may be described in detail. Descriptions overlapping with those for FIG. 11 in the following embodiment of the disclosure may be omitted.

In operation 1210, the base station may transmit an index of the optimal 2D precoding selected in operation 640 described above to the UE. Information on the index of the 2D precoding selected by the base station may be included in at least one of higher layer signaling (e.g., an RRC message or MAC signaling)) or control information (e.g., DCI). In an embodiment, the base station may include, in an RRC message, a method (e.g., Indication_PDSCH_2D_precoding) of indicating 2D precoding to be used for transmission of downlink data. The base station may configure, through the RRC message, how to indicate a 2D precoding index to the UE.

In an embodiment, in a case where the base station indicates the selected 2D precoding to the UE through DCI (e.g., Indication_PDSCH_2D_precoding = {DCI}), the base station may transmit, to the UE, DCI including index information (e.g., Index_PDSCH_2D_precoding_DCI = {1, ..., N_2D_Precoding}) of the selected 2D precoding. After receiving the DCI from the base station, the UE may decode an Index_2D_precoding_DCI value to identify the index of the 2D precoding selected by the base station. In addition, in a case where the base station indicates the selected 2D precoding to the UE through DCI, dynamic switching between OFDM and OTFS, to which the 2D precoding selected by the base station is applied, may be possible. The base station may configure, through an RRC message (e.g., Cont_Util_PDSCH_2D_precoding = {Enabled, Disabled}), which mode (e.g., OFDM or OTFS, to which the 2D precoding selected by the base station is applied) to switch to. For example, when Cont_Util_PDSCH_2D_precoding = Enabled, this may indicate that the index of the selected 2D precoding is used until a newly updated 2D precoding index is received through subsequent DCI. On the other hand, when Cont_Util_PDSCH_2D_precoding = Disabled, this may indicate that the index of the selected 2D precoding may be valid for a valid time (e.g., N_valid_time = 10ms) after DCI reception and the mode is changed to the previously used OFDM after the valid time.

In an embodiment, in a case where the base station indicates the index of the selected 2D precoding to the UE through MAC signaling (e.g., a MAC CE) (e.g., Indication_PDSCH_2D_precoding = {MAC}), the base station may select one of N_2D_Precoding indices and transmit, to the UE, information on the index of the selected 2D precoding through MAC signaling (e.g., Index_PDSCH_2D_precoding_MAC = {1, ..., N_2D_Precoding}). In addition, in a case where the base station indicates the selected 2D precoding to the UE through MAC signaling, switching between OFDM and OTFS, to which the 2D precoding selected by the base station is applied, may be performed semi-statically through a MAC CE.

In an embodiment, in a case where the base station transfers the index of the selected 2D precoding to the UE through an RRC message (e.g., Indication_PDSCH_2D_precoding = {RRC}), the base station may inform the UE of information on the index of the selected 2D precoding through an RRC message (e.g., PDSCH-Config.2DPrecoding = {1, 2, ..., N_2D_Precoding}). For example, the base station may configure, through an RRC message, an index of 2D precoding to be used at the time of initial access (e.g., Msg 3 in a random access procedure) for the UE (e.g., RACH-ConfigCommon.msg3-2DPrecoding = {1, 2, ..., N_2D_Precoding}). In addition, the base station may configure, through an RRC message, an index of 2D precoding to be used in a PUSCH for the UE (e.g., PUSCH-Config.2DPrecoding ={1, 2, ..., N_2D_Precoding}). In an embodiment, in a case where the index of the selected 2D precoding is indicated to the UE through an RRC message, an index value of 1 may indicate OFDM, and any other value may indicate the UE to apply 2D precoding. In addition, in a case where the base station indicates the selected 2D precoding to the UE through an RRC message, switching between OFDM and OTFS, to which the 2D precoding selected by the base station is applied, may be performed statically through an RRC message.

In operation 1220, the UE may generate uplink data (e.g., data transmitted on a PUSCH) and then apply *U*_{T} and *U*_{F} corresponding to the index to the uplink data (e.g., data transmitted on a PUSCH) by using information on the index of the 2D precoding designated in operation 1210 described above. The UE may transmit, to the base station, the uplink data (e.g., data transmitted on a PUSCH) to which *U*_{T} and *U_{F}* are applied. The index of the 2D precoding designated by the base station may be applied not only to uplink data but also to Msg3 transmission in a random access procedure.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

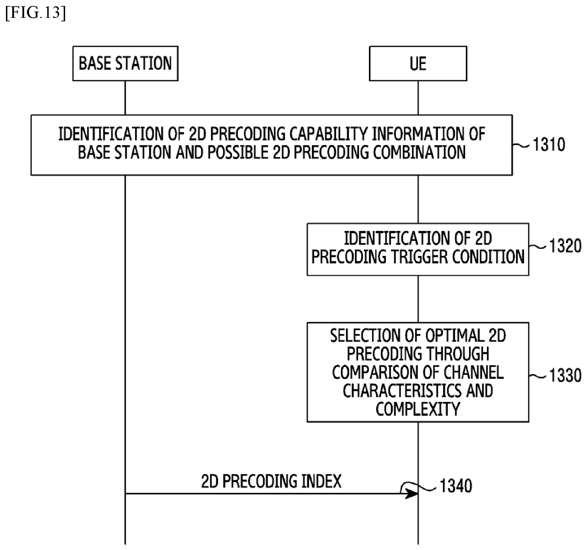

FIG. 13 illustrates a 2D precoding selection procedure of a UE according to embodiments of the disclosure.

Referring to FIG. 13, a method of configuring and signaling 2D precoding when a UE triggers a 2D precoding selection procedure may be described.

In operation 1310, a UE may identify, through a higher layer message (e.g., an RRC message), whether a base station has a 2D precoding capability. For example, the 2D precoding capability of the base station may indicate whether the base station supports 2D precoding. In an embodiment, the base station may transmit an RRC message to the UE in order to transfer capability information on 2D precoding to the UE. The capability information on 2D precoding may be included in the form of UE_2DPrecoding_Capability = {Enabled, Disabled}. The base station may transmit the capability information on 2D precoding to the UE, based on pre-configured (or installed) 2D precoding support information. For example, if the base station does not support 2D precoding (e.g., BS_2DPrecoding_Capability = {Disabled}), the UE may stop a 2D precoding selection procedure according to a response of the base station, and transmit and/or receive data, based on existing OFDM. For example, if the base station supports 2D precoding (e.g., BS_2DPrecoding_Capability = {Enabled}), the UE may perform the 2D precoding selection procedure according to an embodiment of the disclosure. Thereafter, according to selection of 2D precoding, the UE may transmit and/or receive data to and/or from the UE, based on OTFS.

Then, the base station may transfer information on a possible 2D precoding combination to the UE. The information on the 2D precoding combination may include available 2D precoding combinations, based on whether the base station supports 2D precoding. In an embodiment, the information on the available 2D precoding combinations may be transmitted in the form of a table identical or similar to that of FIG. 8 described above. For example, the information on the available 2D precoding combinations may include 2DPreIndex, and each combination of U_{T} and U_{F}. 2DPreIndex may refer to each index of combinations of U_{T} and U_{F}. The information on the available 2D precoding combinations may be composed of N_2D_Precoding elements, and N_2D_Precoding may indicate that N_2D_Precoding combinations of U_{T} and U_{F} are available. For example, U_{T} and U_{F} may be one of a unit matrix, an identity matrix, DFT, WH, or SWH. In this case, the information on the available 2D precoding combinations may be included in a higher layer message (e.g., an RRC message). The information on the available 2D precoding combinations may be pre-configured (or installed) in the UE. Therefore, the base station may not need to transfer the information on the available 2D precoding combinations to the UE. However, the above example is merely an example of the information on the available 2D precoding combinations, and the information on the available 2D precoding combinations is not limited to the above example.

In operation 1320, the UE may identify whether a 2D precoding trigger condition is satisfied. For example, a 2D precoding selection operation (e.g., operation 1330 below) may be periodically performed, or may be performed if a specific condition is satisfied, based on a pre-configured value. In an embodiment, the 2D precoding selection operation of the UE may be configured to be periodically performed. For example, the UE may perform the 2D precoding selection operation every 10ms. A value (e.g., N_Period_2Dprecoding) for a period of the 2D precoding selection operation of the UE may be configured or indicated from an upper layer (e.g., RRC layer or MAC layer) or may be a value pre-configured (or installed) in the UE. In an embodiment, the 2D precoding selection operation of the UE may be configured to be performed when a specific event occurs. For example, the UE may perform the 2D precoding selection operation when a Doppler shift value (e.g., *f_{D}*) estimated based on a pilot symbol received from the base station is equal to or greater than (or exceeds) a threshold value (e.g., *f*_{*D*,*Th*}). For example, when *f_{D}* > *f*_{*D*,}*_{Th},* the 2D precoding selection operation may be performed. The threshold value (e.g., *f*_{*D*,*Th*}) may be calculated based on a carrier frequency and a target velocity. In addition, the threshold value (e.g., *f*_{*D*,*Th*}) may be configured or indicated from an upper layer (e.g., an RRC layer or a MAC layer) or may be a value pre-configured (or installed) in the UE. In an embodiment, the UE may request the base station to transmit a pilot symbol to identify a characteristic of a channel with the base station. An operation of requesting the pilot symbol may be performed to identify a statistical channel characteristic rather than an instantaneous channel characteristic. In addition, since the request for the pilot symbol is not for data decoding, overhead may not occur even when the request for the pilot symbol is transmitted in units of several hundred milliseconds to several seconds. In this case, the request for the pilot symbol may be transmitted through a control channel (e.g., a PUCCH). In addition, the pilot symbol may be an existing reference signal (e.g., including at least one of a CSI-RS or a DM-RS) or a newly defined pilot. For example, the newly defined pilot may include guard bands and may include consecutive pilot symbols in the time domain. The UE may be able to perform more accurate channel estimation through the consecutive pilot symbols in the time domain. The base station may transmit the pilot symbol to the UE, based on the request for the pilot symbol received from the UE.

In operation 1330, when the 2D precoding trigger condition is satisfied, the UE may select optimal 2D precoding. The UE may select optimal 2D precoding, based on a pilot symbol received from the base station. In an embodiment, the UE may identify a channel characteristic and complexity through the pilot symbol received from the base station and select optimal 2D precoding. For example, the UE may receive a pilot symbol from the base station and estimate a channel H*_{ft}*. In addition, the UE may select preferred 2D precoding, based on at least one of the estimated channel *H*_{ft} or the calculation complexity of each precoder.

In operation 1340, the base station may transmit an index of selected 2D precoding to the UE. When selecting 2D precoding, the base station may consider information reported by the UE (e.g., an index of the optimal 2D precoding selected by the UE or an index of the 2D precoding preferred by the UE in operation 1330 described above). Accordingly, operation 1340 may further include, after operation 1330, a procedure in which the UE reports, to the base station, information on the index of the 2D precoding selected by the UE. The index value transmitted by the base station may be one of the index values included in the information on the 2D precoding combination received from the base station in operation 1310. Information on the index of the 2D precoding selected by the base station may be included in at least one of higher layer signaling (e.g., an RRC message or MAC signaling)) or control information (e.g., DCI).

In an embodiment, the base station may include, in an RRC message, a method (e.g., Indication_PDSCH_2D_precoding) of indicating 2D precoding to be used for transmission of downlink data. The base station may configure, through the RRC message, how to indicate a 2D precoding index to the UE.

In an embodiment, in a case where the base station indicates the selected 2D precoding to the UE through DCI (e.g., Indication_PDSCH_2D_precoding = {DCI}), the base station may transmit, to the UE, DCI including index information (e.g., Index_PDSCH_2D_precoding_DCI = {1, ..., N_2D_Precoding}) of the selected 2D precoding. After receiving the DCI from the base station, the UE may decode an Index_2D_precoding_DCI value to identify the index of the 2D precoding selected by the base station. In addition, in a case where the base station indicates the selected 2D precoding to the UE through DCI, dynamic switching between OFDM and OTFS, to which the 2D precoding selected by the base station is applied, may be possible. The base station may configure, through an RRC message (e.g., Cont_Util_PDSCH_2D_precoding = {Enabled, Disabled}), which mode (e.g., OFDM or OTFS, to which the 2D precoding selected by the base station is applied) to switch to. For example, when Cont_Util_PDSCH_2D_precoding = Enabled, this may indicate that the index of the selected 2D precoding is used until a newly updated 2D precoding index is received through subsequent DCI. On the other hand, when Cont_Util_PDSCH_2D_precoding = Disabled, this may indicate that the index of the selected 2D precoding may be valid for a valid time (e.g., N_valid_time = 10ms) after DCI reception and the mode is changed to the previously used OFDM after the valid time.

In an embodiment, in a case where the base station indicates the index of the selected 2D precoding to the UE through MAC signaling (e.g., a MAC CE) (e.g., Indication_PDSCH_2D_precoding = {MAC}), the base station may select one of N_2D_Precoding indices and transmit, to the UE, information on the index of the selected 2D precoding through MAC signaling (e.g., Index_PDSCH_2D_precoding_MAC = {1, ..., N_2D_Precoding}). In addition, in a case where the base station indicates the selected 2D precoding to the UE through MAC signaling, switching between OFDM and OTFS, to which the 2D precoding selected by the base station is applied, may be performed semi-statically through a MAC CE.

In an embodiment, in a case where the base station transfers the index of the selected 2D precoding to the UE through an RRC message (e.g., Indication_PDSCH_2D_precoding = {RRC}), the base station may inform the UE of information on the index of the selected 2D precoding through an RRC message (e.g., PDSCH-Config.2DPrecoding = {1, 2, ..., N_2D_Precoding}). For example, the base station may configure, through an RRC message, an index of 2D precoding to be used at the time of initial access (e.g., Msg 3 in a random access procedure) for the UE (e.g., RACH-ConfigCommon.msg3-2DPrecoding = {1, 2, ..., N_2D_Precoding}). In addition, the base station may configure, through an RRC message, an index of 2D precoding to be used in a PUSCH for the UE (e.g., PUSCH-Config.2DPrecoding ={1, 2, ..., N_2D_Precoding}). In an embodiment, in a case where the index of the selected 2D precoding is indicated to the UE through an RRC message, an index value of 1 may indicate OFDM, and any other value may indicate the UE to apply 2D precoding. In addition, in a case where the base station indicates the selected 2D precoding to the UE through an RRC message, switching between OFDM and OTFS, to which the 2D precoding selected by the base station is applied, may be performed statically through an RRC message.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

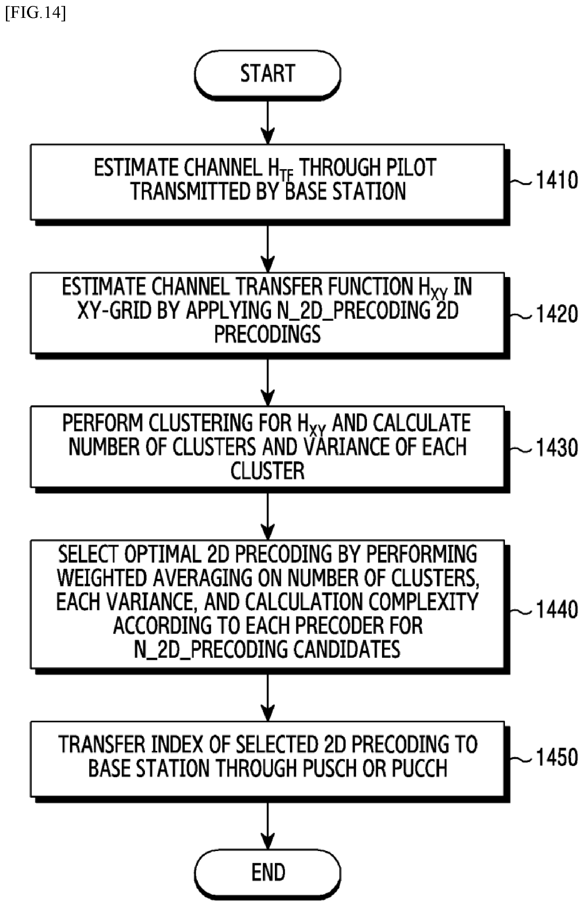

FIG. 14 is an operation flowchart for 2D precoding selection according to embodiments of the disclosure.

Referring to FIG. 14, a procedure for selecting, by the UE, preferred 2D precoding, based on the pilot symbol received from the base station in operation 1330 described above, may be described in detail. However, the operations of the UE in the following embodiment may include the same or similar UE operations in the same spirit as the operations of the base station in FIG. 10 described above.

In operation 1410, the UE may receive a pilot symbol from the base station and estimate a channel H*_{ft}*. For example, the UE may perform channel estimation based on an LS or an MMSE scheme for an RE including the pilot symbol for the *H*_{ft} estimation. The UE may perform interpolation for the remaining Res. Therefore, as described above with reference to FIG. 9, in order to improve the accuracy of channel estimation, a newly defined pilot symbol may be used.

In operation 1420, the UE may perform inverse 2D precoding using each 2D precoding combination (e.g., operation 1310), which is received from the base station, for H_{ft} that is a time-frequency domain channel, thereby performing inverse 2D precoding using each 2D precoding combination. The UE may acquire H*_{xy}* that is a channel transfer function of a x-y domain channel. H*_{xy}* that is a channel transfer function of a x-y domain channel may be expressed as ${H}_{xy} = {U}_{F}^{- 1} {H}_{ft} {U}_{T}^{- 1}$. For example, in a case where M-point DFT *U_{F}* = *F_{M}* and N-point IDFT ${U}_{F} = {F}_{N}^{- 1}$ as in OTFS, when SFFT is applied to the estimated H*_{ft}*, same is transformed onto a delay-Doppler grid so that a channel (e.g., *H_{DD}*) in the delay-Doppler domain may be calculated. For example, when IFFT (on the left side) and inverse Walsh Hadamard transform (IWHT) (on the right side) are applied to the estimated H*_{ft}*, same is transformed onto a delay-sequency grid so that a channel (e.g., *H_{DS}*) in the delay-sequency domain may be calculated.

In operation 1430, the UE may perform clustering for H*_{xy}* that is a M × N matrix, and calculate the number of clusters and a variance of each cluster. For example, the UE may identify up to M data groups for H*_{xy}* that is a M × N matrix, based on the x-axis. In addition, the UE may identify up to N data groups for H*_{xy}* that is a M × N matrix, based on the y-axis. In addition, the UE may calculate the variance for each of multiple data groups.

In operation 1440, the UE may measure sparsity on each of the x-axis and the y-axis by using the number of clusters and the variance of each cluster. The UE may select optimal 2D precoding (*U_{T}, U_{F}*) by performing weighted averaging on the number of clusters, the variance of each cluster, and calculation complexity according to each precoder for N_2D_Precoding candidates (e.g., the available 2D precoding combinations in operation 1310 described above). In this case, the optimal 2D precoding is 2D precoding having a small number of clusters and low sparsity and complexity among the N_2D_Precoding candidates, and may be 2D precoding preferred by the UE.

In operation 1450, the UE may transmit information on an index of the selected 2D precoding to the base station through a PUSCH or PUCCH. The base station may select optimal 2D precoding by considering the information on the index of the 2D precoding preferred by the UE. In an embodiment, if there is an index of preferred 2D precoding which has already been calculated by the base station for the UE within a certain time, the base station may prefer and indicate, to the UE, the index of 2D precoding preferred by the base station rather than the index of 2D precoding preferred by the UE. On the contrary, if there is no index of 2D precoding which has already been calculated by the base station for the UE within a certain time, the base station may select and indicate, to the UE, the index of 2D precoding preferred by the UE.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

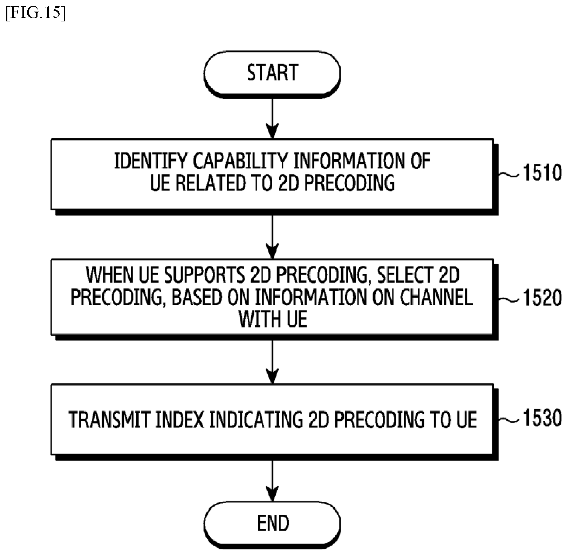

FIG. 15 illustrates a 2D precoding selection procedure of a base station according to embodiments of the disclosure.

Referring to FIG. 15, a method of configuring and signaling 2D precoding when a base station triggers a 2D precoding selection procedure according to the above embodiments may be described. Therefore, in the following embodiment, the base station may further perform operations in the above embodiments (e.g., FIG. 6 to FIG. 12), and overlapping descriptions may be omitted.

In operation 1510, the base station may identify capability information on 2D precoding of the UE. For example, the base station may identify, through a higher layer message (e.g., an RRC message), whether a UE has a 2D precoding capability. The 2D precoding capability of the UE may indicate whether the UE supports 2D precoding.

In operation 1520, when the UE supports 2D precoding, the base station may select 2D precoding, based on information on a channel with the UE. For example, a 2D precoding selection operation may be periodically performed, or may be performed if a specific condition is satisfied, based on a pre-configured value. When the 2D precoding trigger condition is satisfied, the base station may select optimal 2D precoding. The base station may estimate a channel with the UE, based on a pilot symbol received from the UE. Therefore, the base station may select optimal 2D precoding, based on the estimated channel.

In operation 1530, the base station may transmit an index indicating the 2D precoding to the UE. The index value transmitted to the UE may be included in at least one of higher layer signaling (e.g., an RRC message or MAC signaling)) or control information (e.g., DCI). Then, the base station may transmit, to the UE, downlink data to which the 2D precoding corresponding to the index is applied. Alternatively, the base station may receive, from the base station, uplink data to which the 2D precoding corresponding to the index is applied.

According to the embodiments described above, the base station may select appropriate 2D precoding, whereby the sparsity of a channel experienced by data (e.g., uplink data or downlink data) may be reduced. Therefore, there may be a gain in terms of channel estimation, and the complexity of a receiver may be reduced. Furthermore, in the embodiments of the disclosure, not only a characteristic of a channel but also the complexity arising from multiplication of 2D precoding are considered together, so that if the channel characteristics are similar, it may also be possible to select 2D precoding capable of further reducing the complexity.

Of course, the disclosure is not limited to the above example. Therefore, at least one of the operations described above may be omitted, and at least one new operation may be added and performed in combination and conjunction with the operations described above. In addition, some of the operations described above may be combined into at least one operation or divided into two or more operations.

According to various embodiments of the disclosure, a method performed by a base station in a wireless communication system may include identifying capability information on two-dimensional (2D) precoding for a terminal, in case that the terminal supports the 2D precoding, selecting the 2D precoding, based on information on a channel with the terminal, and transmitting an index indicating the 2D precoding to the terminal, wherein the 2D precoding is applied to at least one of an uplink signal or a downlink signal.

In an embodiment, the identifying of the capability information on the 2D precoding may include transmitting, to the terminal, a radio resource control (RRC) message for requesting the capability information, and receiving the capability information from the terminal, and the capability information may include information on whether the terminal supports the 2D precoding.

In an embodiment, the method may further include transmitting information on a 2D precoding combination to the terminal, wherein the information on the 2D precoding combination includes information on a combination of a precoding matrix based on a frequency domain and a precoding matrix based on a time domain.

In an embodiment, the method may further include transmitting downlink control information (DCI) for requesting a pilot symbol to the terminal, receiving the pilot symbol from the terminal, based on the DCI, and estimating a channel with the terminal, based on the pilot symbol.

In an embodiment, the selecting of the 2D precoding may be periodically performed or may be performed in case that a Doppler shift value related to the terminal is equal to or greater than a threshold value.

In an embodiment, the method may further include transmitting information on an application method of the 2D precoding to the terminal, wherein a first method among application methods is applying the 2D precoding until downlink control information (DCI) including an index indicating 2D precoding to be applied after the 2D precoding is received, and wherein a second method among the application methods is applying the 2D precoding only within a valid time of the 2D precoding.

According to various embodiments of the disclosure, a method performed by a terminal in a wireless communication system may include identifying capability information on two-dimensional (2D) precoding for a base station, in case that the base station supports the 2D precoding, selecting first 2D precoding, based on information on a channel with the base station, transmitting information on the first 2D precoding to the base station, and receiving an index indicating second 2D precoding from the base station, wherein the 2D precoding is applied to at least one of an uplink signal or a downlink signal.

In an embodiment, the method may further include receiving information on a 2D precoding combination from the base station, wherein the information on the 2D precoding combination includes information on a combination of a precoding matrix based on a frequency domain and a precoding matrix based on a time domain.

In an embodiment, the method may further include receiving a pilot symbol from the base station, and estimating a channel with the base station, based on the pilot symbol.

In an embodiment, the selecting of the 2D precoding may be periodically performed or may be performed in case that a Doppler shift value related to the terminal is equal to or greater than a threshold value.

According to various embodiments of the disclosure, a base station in a wireless communication system may include a transceiver, and at least one controller connected to the transceiver, wherein the at least one controller is configured to identify capability information on two-dimensional (2D) precoding for a terminal, in case that the terminal supports the 2D precoding, select the 2D precoding, based on information on a channel with the terminal, and transmit an index indicating the 2D precoding to the terminal, wherein the 2D precoding is applied to at least one of an uplink signal or a downlink signal, and wherein the second 2D precoding is determined based on the first 2D precoding.

In an embodiment, the at least one controller may be configured to transmit, to the terminal, a radio resource control (RRC) message for requesting the capability information and receive the capability information from the terminal, and the capability information may include information on whether the terminal supports the 2D precoding.

In an embodiment, the at least one controller may be further configured to transmit information on a 2D precoding combination to the terminal, and the information on the 2D precoding combination may include information on a combination of a precoding matrix based on a frequency domain and a precoding matrix based on a time domain.

In an embodiment, the at least one controller may be further configured to transmit downlink control information (DCI) for requesting a pilot symbol to the terminal, receive the pilot symbol from the terminal, based on the DCI, and estimate a channel with the terminal, based on the pilot symbol.

In an embodiment, the selecting of the 2D precoding may be periodically performed or may be performed in case that a Doppler shift value related to the terminal is equal to or greater than a threshold value.

In an embodiment, the at least one controller may be further configured to transmit information on an application method of the 2D precoding to the terminal, a first method among application methods may be applying the 2D precoding until downlink control information (DCI) including an index indicating 2D precoding to be applied after the 2D precoding is received, and a second method among the application methods may be applying the 2D precoding only within a valid time of the 2D precoding.

According to various embodiments of the disclosure, a terminal in a wireless communication system may include a transceiver, and at least one controller connected to the transceiver, wherein the at least one controller is configured to identify capability information on two-dimensional (2D) precoding for a base station, in case that the base station supports the 2D precoding, select first 2D precoding, based on information on a channel with the base station, transmit information on the first 2D precoding to the base station, and receive an index indicating second 2D precoding from the base station, wherein the 2D precoding is applied to at least one of an uplink signal or a downlink signal, and wherein the second 2D precoding is determined based on the first 2D precoding.

In an embodiment, the at least one controller may be further configured to receive information on a 2D precoding combination from the base station, and the information on the 2D precoding combination may include information on a combination of a precoding matrix based on a frequency domain and a precoding matrix based on a time domain.

In an embodiment, the at least one controller may be further configured to receive a pilot symbol from the base station, and estimate a channel with the base station, based on the pilot symbol.

In an embodiment, the selecting of the 2D precoding may be periodically performed or may be performed in case that a Doppler shift value related to the terminal is equal to or greater than a threshold value.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the aforementioned specific embodiments of the present disclosure, components included in the disclosure have been expressed in the singular or the plural according to the specific embodiments presented. However, the singular or plural expressions have been selected to suit the situations presented for convenience of description, and the present disclosure is not limited to the singular or plural components. A component expressed in the plural may be configured in the singular, and a component expressed in the singular may be configured in the plural.

Meanwhile, although specific embodiments have been described in the detailed description of the present disclosure, it goes without saying that various modifications are possible within a scope that does not depart from the scope of the present disclosure. Therefore, the scope of the present disclosure should not be determined as being limited to the described embodiments, but should be determined by the claims described below as well as equivalents thereto.

## Claims

1. A method performed by a base station in a wireless communication system, the method comprising:
identifying capability information of a terminal regarding two-dimensional (2D) precoding;
in case that the terminal supports the 2D precoding, selecting the 2D precoding, based on information on a channel with the terminal; and
transmitting an index indicating the 2D precoding to the terminal,
wherein the 2D precoding is applied to at least one of an uplink signal or a downlink signal.

2. The method of claim 1, wherein the identifying of the capability information regarding the 2D precoding comprises:
transmitting, to the terminal, a radio resource control (RRC) message for requesting the capability information; and
receiving the capability information from the terminal, and
wherein the capability information comprises information on whether the terminal supports the 2D precoding.

3. The method of claim 1, further comprising transmitting information on a 2D precoding combination to the terminal,
wherein the information on the 2D precoding combination comprises information on a combination of a frequency-domain precoding matrix and a time-domain precoding matrix.

4. The method of claim 1, further comprising:
transmitting, to the terminal, downlink control information (DCI) for requesting a pilot symbol;
receiving the pilot symbol from the terminal, based on the DCI; and
estimating a channel with the terminal, based on the pilot symbol,
wherein the selecting of the 2D precoding is periodically performed or is performed in case that a Doppler shift value related to the terminal is equal to or greater than a threshold value.

5. The method of claim 1, further comprising transmitting information on application methods of the 2D precoding to the terminal,
wherein a first method among the application methods is a method in which the 2D precoding is applied until DCI including an index indicating 2D precoding to be applied after the 2D precoding is received, and
wherein a second method among the application methods is a method in which the 2D precoding is applied only within a valid time of the 2D precoding.

6. A method performed by a terminal in a wireless communication system, the method comprising:
identifying capability information of a base station regarding two-dimensional (2D) precoding;
in case that the base station supports the 2D precoding, selecting first 2D precoding, based on information on a channel with the base station;
transmitting information on the first 2D precoding to the base station; and
receiving an index indicating second 2D precoding from the base station,
wherein the 2D precoding is applied to at least one of an uplink signal or a downlink signal, and
wherein the second 2D precoding is determined based on the first 2D precoding.

7. The method of claim 6, further comprising receiving information on a 2D precoding combination from the base station,
wherein the information on the 2D precoding combination comprises information on a combination of a frequency-domain precoding matrix and a time-domain precoding matrix.

8. The method of claim 6, further comprising:
receiving a pilot symbol from the base station; and
estimating a channel with the base station, based on the pilot symbol,
wherein the selecting of the 2D precoding is periodically performed or is performed in case that a Doppler shift value related to the terminal is equal to or greater than a threshold value.

9. A base station in a wireless communication system, the base station comprising:
a transceiver; and
at least one controller connected to the transceiver,
wherein the at least one controller is configured to:
identify capability information of a terminal regarding two-dimensional (2D) precoding;
in case that the terminal supports the 2D precoding, select the 2D precoding, based on information on a channel with the terminal; and
transmit an index indicating the 2D precoding to the terminal, and
wherein the 2D precoding is applied to at least one of an uplink signal or a downlink signal.

10. The base station of claim 9, wherein the at least one controller is configured to:
transmit, to the terminal, a radio resource control (RRC) message for requesting the capability information; and
receive the capability information from the terminal, and
wherein the capability information comprises information on whether the terminal supports the 2D precoding.

11. The base station of claim 9, wherein the at least one controller is further configured to transmit information on a 2D precoding combination to the terminal, and
wherein the information on the 2D precoding combination comprises information on a combination of a frequency-domain precoding matrix and a time-domain precoding matrix.

12. The base station of claim 9, wherein the at least one controller is further configured to:
transmit, to the terminal, downlink control information (DCI) for requesting a pilot symbol;
receive the pilot symbol from the terminal, based on the DCI; and
estimate a channel with the terminal, based on the pilot symbol, and
wherein the selection of the 2D precoding is periodically performed or is performed in case that a Doppler shift value related to the terminal is equal to or greater than a threshold value.

13. The base station of claim 9, wherein the at least one controller is further configured to transmit information on application methods of the 2D precoding to the terminal,
wherein a first method among the application methods is a method in which the 2D precoding is applied until DCI including an index indicating 2D precoding to be applied after the 2D precoding is received, and
wherein a second method among the application methods is a method in which the 2D precoding is applied only within a valid time of the 2D precoding.

14. A terminal in a wireless communication system, the terminal comprising:
a transceiver; and
at least one controller connected to the transceiver,
wherein the at least one controller is configured to:
identify capability information of a base station regarding two-dimensional (2D) precoding;
in case that the base station supports the 2D precoding, select first 2D precoding, based on information on a channel with the base station;
transmit information on the first 2D precoding to the base station; and
receive an index indicating second 2D precoding from the base station,
wherein the 2D precoding is applied to at least one of an uplink signal or a downlink signal, and
wherein the second 2D precoding is determined based on the first 2D precoding.

15. The terminal of claim 14, wherein the at least one controller is further configured to receive information on a 2D precoding combination from the base station, and
wherein the information on the 2D precoding combination comprises information on a combination of a frequency-domain precoding matrix and a time-domain precoding matrix.
